# EUROPÄISCHE PATENTSCHRIFT

(11) **EP 2 287 952 B1**
(45) Veröffentlichungstag und Bekanntmachung des Hinweises auf die Patenterteilung: **16.10.2013**
(21) Anmeldenummer: 10171689.2
(22) Anmeldetag: 03.08.2010
(51) Int. Cl.: H01M 8/04, B60H 1/00, H01M 8/10

(54) **Temperiervorrichtung**
Tempering device
Dispositif de régulation

(30) Priorität: 19.08.2009 DE 102009028648
(43) Veröffentlichungstag der Anmeldung: 23.02.2011
(73) Patentinhaber: Robert Bosch GmbH, 70442 Stuttgart (DE)
(72) Erfinder: Pfeil, Oliver, 77815, Buehl (DE)

(56) Entgegenhaltungen:
- DE-A1- 10 152 233
- DE-C1- 19 850 829
- DE-T5-112007 002 347
- JP-A- 2006 244 928
- KIM ET AL: "Heating performance enhancement of a CO2 heat pump system recovering stack exhaust thermal energy in fuel cell vehicles" INTERNATIONAL JOURNAL OF REFRIGERATION, ELSEVIER, PARIS, FR LNKD- DOI:10.1016/J.IJREFRIG.2007.02.002, Bd. 30, Nr. 7, 4. September 2007 (2007-09-04), Seiten 1215-1226, XP022230052 ISSN: 0140-7007

## Beschreibung

Die Erfindung betrifft eine Temperiervorrichtung mindestens zum Temperieren mindestens einer Brennstoffzelle eines Brennstoffzellensystems, insbesondere für ein Kraftfahrzeug, wobei die Brennstoffzelle durch ein Kühlmittel, das in einem Kühlsystem strömbar ist, temperierbar ist, mit mindestens einem Kühler und mit einer Wärmepumpe, in der ein Kältemittel zirkulierbar ist, wobei die Wärmepumpe eine erste Aufwärmvorrichtung zum Erwärmen des Kühlmittels durch das Kältemittel aufweist, wobei die erste Aufwärmvorrichtung in einem ersten Kühlmittelteilpfad des Kühlsystems angeordnet ist, gemäß dem Oberbegriff von Anspruch 1. Weiterhin betrifft die Erfindung ein Verfahren zum Betreiben einer Temperiervorrichtung gemäß dem Oberbegriff von Anspruch 14.

### Stand der Technik

Niedrigtemperaturbrennstoffzellen, wie z. B. Polymer-Elektrolytmembran-Brennstoffzellen, benötigen einen sehr leistungsstarken Kühler, da die Betriebstemperatur von beispielsweise 60-80°C für eine Polymer-Elektrolytmembran-Brennstoffzelle nur wenig über der Umgebungstemperatur liegt und zudem ein hoher Wärmeeintrag aus der Brennstoffzelle in das Kühlmittel erfolgt. Dieses führt dazu, dass bei hoher Last die Kühlung nicht mehr ausreicht und die Leistung der Brennstoffzelle auf Grund der unzureichenden Kühlung beschränkt werden muss. Bei einem Einsatz der Brennstoffzelle in einem Kraftfahrzeug ist die Leistung bei hohen Umgebungstemperaturen bei Bergfahrten und bei hoher Geschwindigkeit zu begrenzen. Zum anderen kann bei einer Betriebsaufnahme der Brennstoffzelle bei niedrigen Temperaturen, die als Kaltstart bezeichnet wird, die Brennstoffzelle nur eine geringe Leistung bereitstellen, da die elektrochemische Reaktion und damit die Spannung der Brennstoffzelle stark temperaturabhängig sind. Daher muss die Temperatur der Brennstoffzelle bei einem Kaltstart zügig erhöht werden. Zudem benötigt ein Brennstoffzellenfahrzeug weitere Kühleinrichtungen, um auch weitere Aggregate wie einen Antriebsmotor, einen Verdichter, eine Leistungselektronik kühlen zu können oder Kühleinrichtungen, die Teil einer Klimaanlage sind.

Die DE 101 52 233 A1 offenbart ein Brennstoffzellensystem mit einem ersten Kühlkreislauf, in dem eine Brennstoffzelleneinheit angeordnet ist. Der erste Kühlkreislauf ist über eine Wärmepumpe an einen separaten zweiten Kühlkreislauf angekoppelt, in dem ein Luftkühler angeordnet sein kann. Die Wärmepumpe entzieht dem ersten Kühlkreislauf Wärme und führt sie dem zweiten Kühlkreislauf auf einem höheren Temperaturniveau zu, so dass der Luftkühler kleiner dimensioniert werden kann. Zusätzlich oder anstelle des Luftkühlers können weitere Komponenten in den beiden Kühlkreisläufen angeordnet sein. So kann die Wärme des zweiten Kühlkreislaufes für eine Heizkomponente zur Erwärmung eines Fahrzeuginnenraumes oder zur Erwärmung eines Brennmittels genutzt werden. Hierzu können weitere Kühlkreisläufe und/oder Wärmepumpen vorgesehen sein. Nachteilig ist, dass mindestens zwei Kühlkreisläufe vonnöten sind, um die Brennstoffzelleneinheit zu kühlen. Hierzu müssen mindestens drei Pumpen, eine für jeden Kühlkreislauf und eine für die Wärmepumpe betrieben werden. Weiterhin kann durch die Anordnung des Luftkühlers in dem zweiten separaten Kühlkreislauf die Brennstoffzelleneinheit auch in einem Teillastbetrieb der Brennstoffzelleneinheit nur durch Betrieb der Wärmepumpe gekühlt werden, obwohl durch die Leistungsaufnahme der Wärmepumpe dieses ineffizient ist. Eine Erwärmung des Brennstoffzellensystems bei einem Kaltstart durch die Wärmepumpe wird erwähnt, eine technische nacharbeitbare Lösung wird jedoch nicht offenbart. Ein Wärmeeintrag durch die Wärmepumpe zum Erwärmen der Brennstoffzelleneinheit ist damit nicht erfasst.

Die DE 198 50 829 C1 offenbart einen Kühl-Heizkreis für ein Fahrzeug mit einer Brennstoffzelle. Der Kühl-Heizkreis ist über einen Wärmetauscher an einen Brennstoffzellen-Kühlkreis, in dem sich die Brennstoffzelle befindet, angekoppelt. Der Kühl-Heizkreis dient zum Kühlen des Wärmetauschers und einer weiteren Einrichtung, z. B. einer Elektronikschaltung oder eines Kompressors, durch einen Fahrzeugkühler. Weiterhin kann an dem Kühl-Heizkreis eine Wärmepumpe angeordnet sein. Die Wärmepumpe dient zur Kühlung oder Erwärmung eines Fahrzeuginnenraumes und bringt Wärme in den Kühl-Heizkreis ein oder entzieht dem Kühl-Heizkreis Wärme. Nachteilig hierbei ist, dass die Ankopplung der Brennstoffzelle über einen Wärmetauscher an den Kühl-Heizkreis für Wirkungsgradverluste sorgt. Die Temperaturniveaus der weiteren Einrichtung und des Wärmetauschers sind zudem nicht entkoppelbar. Weiterhin ist nachteilig, dass die Wärmepumpe nur betrieben wird, um den Fahrzeuginnenraum zu kühlen oder zu erwärmen und der Betrieb der Wärmepumpe sich daher nicht an den Bedürfnissen der Brennstoffzelle orientieren kann. So wird bei einem Brennstoffzellenbetrieb in Volllast und bei einem Betrieb der Wärmepumpe zum Kühlen des Fahrzeuginnenraums der Kühl-Heizkreis durch die Wärmepumpe zusätzlich belastet. Wird Wärme aus der Wärmepumpe in ein Kühlmittel des Kühl-Heizkreis eingetragen, so wird das durch die Wärmepumpe erwärmte Kühlmittel mit dem übrigen Kühlmittel, das den Wärmetauscher und die weitere Einrichtung gekühlt hat, vermischt und so dem Fahrzeugkühler zugeführt, so dass das Temperaturniveau des durch die Wärmepumpe erwärmten Kühlmittels sinkt und eine Kühlung ineffizient wird.

Weiterhin ist aus der DE 11 2007 002347 T5 ein Klimatisierungs-SteuerungsSystem mit einer Kühlvorrichtung zum Kühlen einer Brennstoffzelle durch Zirkulieren eines Kühlmittels durch die Brennstoffzelle mittels einer Hauptzirkulationspumpe bekannt, wobei ein Wärmeaustausch zwischen der Kühlvorrichtung und der Klimatisierungs-Steuerungs-Vorrichtung möglich ist.

### Offenbarung der Erfindung

Es ist Aufgabe der Erfindung, eine Temperiervorrichtung mindestens zum Temperieren mindestens einer Brennstoffzelle eines Brennstoffzellensystems, insbesondere für ein Kraftfahrzeug, und ein Verfahren zum Betrieb der Temperiervorrichtung bereitzustellen, bei dem Wärme, die durch eine Wärmepumpe in ein Kühlsystem, das zum Temperieren der Brennstoffzelle dient, eingetragen wird, möglichst effizient und/oder effektiv abgeführt werden kann. Hierbei kann die Wärme insbesondere die Abwärme der Brennstoffzelle sein.

Zur Lösung dieser Aufgabe wird eine Temperiervorrichtung mit den Merkmalen des Anspruches 1, insbesondere des kennzeichnenden Teils, vorgeschlagen. Vorteilhafte Weiterbildungen der Temperiervorrichtung sind in den abhängigen Vorrichtungsansprüchen angegeben. Die Aufgabe wird weiterhin gelöst durch ein Verfahren gemäß dem unabhängigen Anspruch 14, wobei vorteilhafte Weiterbildungen in dem abhängigen Verfahrensanspruch angegeben sind. Merkmale und Details, die in Zusammenhang mit der erfindungsgemäßen Temperiervorrichtung beschrieben sind, gelten dabei selbstverständlich auch im Zusammenhang mit dem erfindungsgemäßen Verfahren und umgekehrt. Dabei können die in den Ansprüchen und in der Beschreibung erwähnten Merkmale jeweils einzeln für sich oder in Kombination erfindungswesentlich sein.

Erfindungsgemäß ist vorgesehen, dass das in dem ersten Kühlmittelteilpfad erwärmbare Kühlmittel auf einem Kühlmittelteilpfad durch einen Kühler zum Kühlen des Kühlmittels strömbar ist. Die Temperiervorrichtung weist ein Kühlsystem auf, in dem mindestens eine Brennstoffzelle angeordnet ist. Durch ein Kühlmittel, das in dem Kühlsystem strömt, kann die Brennstoffzelle gekühlt werden. Vorzugsweise ist ebenfalls eine Erwärmung der Brennstoffzelle durch das Kühlmittel des Kühlsystems bei einem Kaltstart möglich. Die Temperiervorrichtung weist ebenfalls eine Wärmepumpe auf. In der Wärmepumpe zirkuliert ein Kältemittel, wobei das Kältemittel in einer Kühlvorrichtung der Wärmepumpe Wärme aufnimmt und in einer Aufwärmvorrichtung der Wärmepumpe Wärme abgibt. In der erfindungsgemäßen Temperiervorrichtung ist mindestens eine erste Aufwärmvorrichtung der Wärmepumpe im Kühlsystem angeordnet, wohingegen eine Kühlvorrichtung der Wärmepumpe im Kühlsystem und/oder außerhalb des Kühlsystems angeordnet sein kann.

Die erste Aufwärmvorrichtung der Wärmepumpe befindet sich in einem ersten Kühlmittelteilpfad des Kühlsystems. Als Kühlmittelteilpfad wird ein Teil des Kühlsystems bezeichnet, in dem nur ein Teil des Kühlmittels strömbar ist, da noch mindestens ein weiterer Kühlmittelteilpfad des Kühlsystems vorhanden ist, in dem das Kühlmittel alternativ strömen kann. Hierbei ist es jedoch denkbar, dass in einem entsprechenden Steuer- oder Regelzustand des Kühlsystems auch das gesamte Kühlmittel durch einen Kühlmittelteilpfad strömt, da ein Ventil den anderen Kühlmittelteilpfad versperrt. Dadurch, dass die erste Aufwärmvorrichtung in einem Kühlmittelteilpfad angeordnet ist, ist es möglich, nur so wenig Kühlmittel durch die erste Aufwärmvorrichtung strömen zu lassen, dass das Kühlmittel durch den Wärmeübertrag aus dem Kältemittel besonders stark erwärmt wird. Die Temperatur des so erwärmten Kühlmittels kann 100-120°C betragen und deutlich über der Temperatur des Kühlmittels beim Verlassen der Brennstoffzelle liegen. Die Anordnung in einem Kühlmittelteilpfad ist auch insbesondere notwendig und sinnvoll, da der Betrieb einer Brennstoffzelle einen hohen Kühlmittelstrom erfordert. Erfindungsgemäß wird das in der ersten Aufwärmvorrichtung erwärmte Kühlmittel nicht mit Kühlmittel, das nicht die Aufwärmvorrichtung durchströmt hat, vermischt, sondern behält in etwa seine hohe Temperatur bei und durchströmt auf einem separaten Kühlmittelteilpfad einen Kühler. Als Kühler wird im Folgenden eine Vorrichtung des Kühlsystems bezeichnet, durch die mindestens ein Teil des Kühlmittelstroms kühlbar ist. Als Kühlvorrichtung wird hingegen ein Teil der Wärmepumpe bezeichnet, durch den das Kältemittel erwärmt wird. Durch die hohe Temperaturdifferenz zwischen der Temperatur des in der ersten Aufwärmvorrichtung stark erwärmten Kühlmittels und einer Temperatur eines Mediums, in das der Kühler die Wärme des Kühlmittels einträgt, z. B. die Umgebungsluft, kann eine besonders effiziente Kühlung erreicht werden. Vorzugsweise ist die erste Aufwärmvorrichtung hinter der Brennstoffzelle in Strömungsrichtung angeordnet, da dort das Kühlmittel bereits durch die Brennstoffzelle erwärmt ist.

Es ist denkbar, dass ein Hauptkühler in dem Kühlsystem angeordnet ist. Der Hauptkühler kann bei einem Einbau der Brennstoffzelle in ein Kraftfahrzeug einem Fahrzeugkühler entsprechen. Der Hauptkühler hat als primäre Aufgabe, das Kühlmittel abzukühlen, und kann insbesondere so dimensioniert sein, dass zumindest in einem Teillastbetrieb der Brennstoffzelle die Kühlung des Hauptkühlers zur Abführung der Wärme der Brennstoffzelle an die Umgebung auch ohne Betrieb der Wärmepumpe ausreicht. Hierdurch kann die Brennstoffzelle auch kühlbar sein, wenn die Wärmepumpe ausgeschaltet ist oder nur, insbesondere zum Kühlen weiterer Vorrichtungen des Kraftfahrzeuges, mit einer geringen aufgenommenen Leistung angeschaltet bleibt.

Hierbei ist es vorteilhaft, wenn der Hauptkühler einen Hochtemperaturkühler und einen Niedrigtemperaturkühler aufweist. Hierdurch wird gewährleistet, dass das in der ersten Aufwärmvorrichtung erwärmte Kühlmittel auf einem separaten Kühlmittelteilpfad den Hochtemperaturkühler des Hauptkühlers durchströmen kann, während gleichzeitig in dem Niedrigtemperaturkühler des Hauptkühlers ebenfalls das Kühlmittel, das nicht durch die erste Aufwärmvorrichtung zusätzlich erwärmt wurde, gekühlt werden kann. Das in der ersten Aufwärmvorrichtung erwärmte Kühlmittel und das nicht in der ersten Aufwärmvorrichtung erwärmte Kühlmittel durchströmen also stofflich getrennt den Hauptkühler. Der Hochtemperaturkühler und der Niedrigtemperaturkühler können parallel und/oder in Reihe geschaltet sein, wobei im Falle einer Reihenschaltung der Hochtemperaturkühler nachgeschaltet ist. Hierbei können sich der Hochtemperaturkühler und der Niedrigtemperaturkühler aus Sicht eines wärmeaufnehmenden, den Hauptkühler durchströmenden Mediums nicht, teilweise oder vollständig überdecken. Der Hochtemperaturkühler und der Niedrigtemperaturkühler können in einer Komponente zusammengefasst sein und beispielsweise im Kreuzstrom von einem durch einen einzigen Kühlerlüfter erzeugten Luftstrom als wärmeaufnehmendes Medium durchströmt werden.

Der Kühler, der das in der ersten Aufwärmvorrichtung erwärmte Kühlmittel kühlt, kann somit der Hauptkühler sein. Zusätzlich oder alternativ kann das in der ersten Aufwärmvorrichtung erwärmte Kühlmittel Einheiten erwärmen, die für den Betrieb des Brennstoffzellensystems oder im Rahmen des Einsatzes des Brennstoffzellensystems notwendig oder sinnvoll sind. Zu diesen Einheiten gehören Erwärmvorrichtungen für die Edukte oder Produkte der Brennstoffzelle, ein Akkumulator im Kaltstart oder eine Heizung. Die Heizung kann einen Fahrzeuginnenraum eines mit der Brennstoffzelle betriebenen Kraftfahrzeuges erwärmen oder bei einem Einsatz der Brennstoffzelle bei einer Kraft-KopplungsAnlage die Heizung eines Haushalts sein. Der Kühler kann somit auch ein Wärmetauscher, in dem das in der ersten Aufwärmvorrichtung erwärmte Kühlmittel abgekühlt und dabei Luft für einen Fahrzeuginnenraum erwärmt wird, sein. Der Wärmetauscher kann die Heizung des Kraftfahrzeuges unterstützen oder ersetzen. So kann eventuell auf Zuheizer verzichtet werden. Durch das hohe Temperaturniveau des in der ersten Aufwärmvorrichtung erwärmten Kühlmittels kann der Wärmetauscher geringe räumliche Ausmaße annehmen und/oder ein Fahrzeuginnenraum kann schneller erwärmt werden. Um mehrere Kühler zum Kühlen des in der ersten Aufwärmvorrichtung erwärmten Kühlmittels zu ermöglichen, kann der erste Kühlmittelteilpfad sich in weitere Kühlmittelteilpfade verzweigen, wobei der Kühlmittelstrom durch die weiteren Kühlmittelteilpfade durch mindestens ein Ventil gesteuert oder geregelt werden kann. Bei den Kühlern kann es sich um mit Luft, gasförmigen Edukten oder Produkten der Brennstoffzelle oder mit Flüssigkeit kühlende Kühler handeln. Alternativ kann mindestens eine dieser Einheiten direkt durch eine weitere Aufwärmvorrichtung der Wärmepumpe erwärmt werden. Hierzu kann die weitere Aufwärmvorrichtung der Wärmepumpe in Reihe oder parallel zu der ersten Aufwärmvorrichtung angeordnet sein. Vorteilhafterweise ist die weitere Aufwärmvorrichtung parallel geschaltet, wobei durch ein Ventil der Kältemittelstrom durch die weitere Aufwärmvorrichtung einstellbar ist. Hierbei kann es sich insbesondere um eine Aufwärmvorrichtung zum Erwärmen eines Kathodenaustrittsstroms oder des Akkumulators im Kaltstart handeln.

Die Wärmepumpe weist mindestens eine Kühlvorrichtung auf, durch die Wärme in das Kältemittel der Wärmepumpe eingetragen wird. Die Kühlvorrichtung kann in dem Kühlsystem angeordnet sein. Dadurch, dass das Kühlmittel in der Kühlvorrichtung zusätzlich gekühlt werden kann, kann eine höhere Kühlleistung von dem Kühlsystem erbracht werden. Hierdurch kann der Hauptkühler kleiner dimensioniert werden und eine Leistungsbegrenzung des Brennstoffzellensystems bei Volllast kann entfallen. Die Kühlvorrichtung kann in Reihe oder parallel zu dem Hauptkühler angeordnet sein.

Alternativ kann die Kühlvorrichtung eine Kühlvorrichtung außerhalb des Kühlsystems sein und zum Kühlen einer weiteren Vorrichtung, zum Beispiel eines Akkumulators, insbesondere eines Traktionsakkumulators, eines Antriebmotors, eines Verdichters, insbesondere zum Verdichten eines Kathodeneintrittsstroms, einer Klimaanlage und/oder einer Leistungselektronik dienen. Hierdurch kann Wärme in das Kühlsystem im Falle eines Kaltstarts eingetragen werden und weitere Kühleinrichtungen zum Kühlen dieser Vorrichtungen eingespart werden. Vorzugsweise weist die Wärmepumpe jedoch sowohl eine erste Kühlvorrichtung, die im Kühlsystem angeordnet ist, und weitere Kühlvorrichtungen auf, um sowohl die Kühlung der Brennstoffzelle zu optimieren als auch Wärme in das Kühlsystem eintragen zu können. Die Kühlvorrichtungen können in Reihe oder vorzugsweise parallel geschaltet sein, wobei bei einer Parallelschaltung durch je ein Expansionsventil der Durchfluss des Kältemittels separat geregelt oder gesteuert werden kann. Im Gegensatz zu den Kühleinrichtungen zum Kühlen dieser Vorrichtungen nach dem Stand der Technik können die erfindungsgemäßen Kühlvorrichtungen zum Kühlen dieser Vorrichtungen frei an einer beliebigen Stelle, z. B. eines Motorraumes eines Kraftfahrzeuges, platziert werden. Der Raum in einem Frontteil des Motorraumes kann daher vollständig für den Hauptkühler verwendet werden. Eine Vorwärmung der Luft, die den Hauptkühler durchströmt, durch die Kühleinrichtungen nach dem Stand der Technik entfällt. Der Kühlerlüfter muss nur betrieben werden, wenn die Brennstoffzelle einen Kühlungsbedarf hat.

Um bei einem Kaltstart die über die Wärmepumpe eingetragene Wärme ohne Durchlaufen eines Kühlers der Brennstoffzelle zuzuführen, kann eine Aufwärmvorrichtung der Wärmepumpe, die das Kühlmittel erwärmt, so angeordnet sein, dass ein Bypass, der an dem Hauptkühler vorbeiführt, hinter der Aufwärmvorrichtung in Strömungsrichtung gesehen angeordnet ist. Alternativ wird ein Kühler beim Kaltstart nicht von einem wärmeaufnehmenden Medium durchströmt.

Insgesamt kann so eine Temperiervorrichtung erreicht werden, die ein hohes Maß an Flexibilität, Effektivität und Effizienz aufweist. Die in der Temperiervorrichtung angeordnete Wärmepumpe kann mehrere Kühlvorrichtungen aufweisen, durch die sowohl das Kühlmittel der Brennstoffzelle selber als auch zusätzliche Vorrichtungen gekühlt werden können. Durch eine parallele Anordnung der Kühlvorrichtungen mit Expansionsventilen können diese bedarfsgerecht von dem Kältemittel durchströmt werden. Die zusätzliche Kühlung des Kühlmittels durch eine Kühlvorrichtung der Wärmepumpe sowie die Wärmeabgabe des Kühlmittels in einem Kühler auf einem hohen Temperaturniveau erlaubt eine effiziente und effektive Kühlung und ermöglicht eine hohe Leistung des Kühlsystems. Durch die Wärmeeintragung der weiteren Kühlvorrichtungen kann ein Kaltstart der Brennstoffzelle verkürzt werden. Wärmeaufnehmende Vorrichtungen können durch weitere Aufwärmvorrichtungen oder durch den in der ersten Aufwärmvorrichtung erwärmten Kühlmittelstrom erwärmt werden. Durch Ventile und eine parallele Anordnung der einzelnen Aufwärmvorrichtungen oder Kühler kann eine bedarfsgerechte Erwärmung gewährleistet werden. Alle nötigen Kühlungen und/oder Erwärmungen können von nur einem Kühlsystem und einer Wärmepumpe vorgenommen werden. Mehrere Kühlkreise oder Wärmepumpen können entfallen. Durch die Anordnung des Hauptkühlers in das Kühlsystem kann die Brennstoffzelle zumindest anteilig auch ohne den Betrieb der Wärmepumpe gekühlt werden, was auch die Ausfallsicherheit erhöht. Der Betrieb der Wärmepumpe kann bedarfsgerecht an die Erfordernisse der Brennstoffzelle angepasst werden, ohne auf einen Betrieb der Klimaanlage oder einer Heizung Rücksicht nehmen zu müssen. Das Kühlmittel des Kühlsystems durchströmt sowohl die Brennstoffzelle als auch den Hauptkühler..

Bei der Brennstoffzelle kann es sich insbesondere um Niedrigtemperaturbrennstoffzellen wie Polymer-Elektrolytmembran-Brennstoffzellen oder Direkt-Methanol-Brennstoffzellen handeln, bei denen aufgrund der niedrigen Betriebstemperatur eine Kühlung ohne Wärmepumpe unzureichend oder wenig effizient ist. Anstelle einer Brennstoffzelle kann ein Brennstoffzellenstapel aus mehreren Brennstoffzellen oder auch mehrere in

Reihe oder parallel geschaltete Brennstoffzellenstapel vorgesehen sein. Die erfindungsgemäße Temperiervorrichtung kann bei einem Brennstoffzellensystem in einem Kraftfahrzeug oder einer Wärme-Kraft-Kopplungsanlage eingesetzt werden.

Die Wärmepumpe weist mindestens in Strömungsrichtung hintereinander angeordnet ein Expansionsventil zum Expandieren des Kältemittels, mindestens eine Kühlvorrichtung, einen Kompressor zum Verdichten des Kältemittels und mindestens eine Aufwärmvorrichtung, in der das Kühlmittel durch das Kältemittel erwärmbar ist, auf. Zusätzlich kann ein innerer Wärmetauscher in der Wärmepumpe zur Erhöhung der Leistung der Wärmepumpe angeordnet sein. In dem Wärmetauscher wird das Kältemittel, das zum Kompressor strömt, erwärmt, und das Kältemittel, das zum Expansionsventil strömt, gekühlt. Die Wärmepumpe kann ein Kältemittel, beispielsweise R134a oder Ammoniak R717,verwenden und im unterkritischen Bereich betrieben werden, so dass die Kühlvorrichtung ein Verdampfer zum Verdampfen eines Kältemittels und die Aufwärmvorrichtung ein Verflüssiger zum Verflüssigen des Kältemittels ist. Alternativ wird die Wärmepumpe mit einem Kältemittel, z. B. Kohlendioxid R744 , in einem teilweise überkritischen Bereich betrieben, so dass die Kühlvorrichtung ein Erwärmer des Kältemittels und die Aufwärmvorrichtung ein Gaskühler für das Kältemittel ist.

Die Aufgabe wird auch gelöst durch ein Verfahren, bei dem ein erster Teilstrom des Kühlmittels durch das Kältemittel in einer ersten Aufwärmvorrichtung der Wärmepumpe erwärmbar ist und mindestens ein Teil des ersten Teilstroms auf einem Kühlmittelteilpfad zu einem Kühler des Kühlsystems strömbar und durch den Kühler separat kühlbar ist.

Weitere, die Erfindung verbessernde Maßnahmen ergeben sich aus der nachfolgenden Beschreibung zu den Ausführungsbeispielen der Erfindung, welche in den Figuren schematisch dargestellt sind. Sämtliche aus den Ansprüchen, der Beschreibung oder der Zeichnung hervorgehenden Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Es zeigen:
- Fig. 1: ein erstes Ausführungsbeispiel einer erfindungsgemäßen Temperiervorrichtung,
- Fig. 2: ein zweites Ausführungsbeispiel der erfindungsgemäßen Temperiervorrichtung,
- Fig. 3: ein drittes Ausführungsbeispiel der erfindungsgemäßen Temperiervorrichtung.

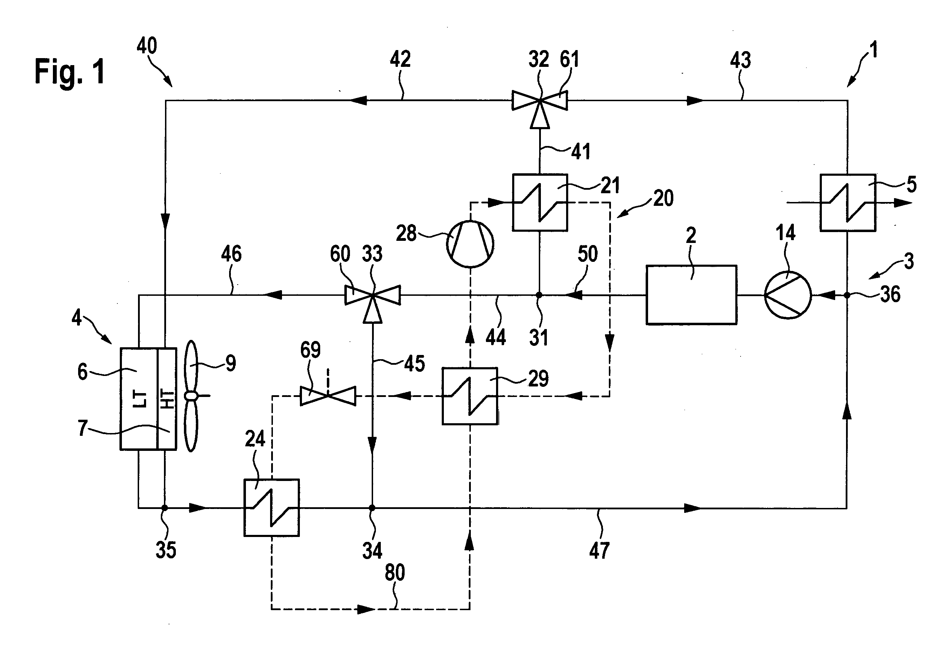

In Fig. 1 ist ein erstes Ausführungsbeispiel einer erfindungsgemäßen Temperiervorrichtung 1, die ein Kühlsystem 40 und eine Wärmepumpe 20 aufweist, dargestellt. Kühlmittelpfade, auf denen ein Kühlmittel das Kühlsystem 40 gemäß den dort dargestellten Pfeilen durchströmt, sind dabei mit durchgezogenen Linien dargestellt, während Kältemittelpfade, auf denen ein Kältemittel die Wärmepumpe 20 gemäß den dort dargestellten Pfeilen durchströmt, mit gestrichelter Linie dargestellt sind. In dem Kühlsystem 40 ist ein Brennstoffzellenstapel 2 angeordnet, wobei der Brennstoffzellenstapel 2 und das Kühlsystem 40 Teil eines in den Figuren nicht vollständig dargestellten Brennstoffzellensystems 3 sind. Das Kühlmittel strömt, von einer Pumpe 14 befördert, durch das Kühlsystem 40, wobei das gesamte Kühlmittel auf einem Kühlmittelhauptpfad 50 den Brennstoffzellenstapel 2 durchströmt. Der Kühlmittelhauptpfad 50 verzweigt sich nach dem Brennstoffzellenstapel 2 an einem ersten Knotenpunkt 31 in einen ersten Kühlmittelteilpfad 41, der sich wiederum in einen zweiten und dritten Kühlmittelteilpfad 42, 43 verzweigt, und in einen vierten Kühlmittelteilpfad 44. An einem hinter dem ersten Knotenpunkt 31 gelegenen dritten Knotenpunkt 33 verzweigt sich der vierte Kühlmittelteilpfad 44 in einen fünften Kühlmittelteilpfad und einen sechsten Kühlmittelteilpfad 46, wobei es sich bei dem fünften Kühlmittelteilpfad um einen Bypass 45 handelt, der das Kühlmittel ohne einen Kühler oder eine Kühlvorrichtung zu passieren im Kühlsystem 40 strömen lässt. Im sechsten Kühlmittelteilpfad 46 hingegen, ist ein Hauptkühler 4 angeordnet, der das Kühlmittel abkühlt. Der Bypass 45 und der sechste Kühlmittelteilpfad 46 vereinen sich am Knotenpunkt 34 zu einem siebten Kühlmittelteilpfad 47, um gemeinsam am Knotenpunkt 36 in den Kühlmittelhauptpfad 50 zu münden. Ein erstes Regelventil 60 kann den Anteil des Kühlmittels, das jeweils entweder den Bypass 45 oder den sechsten Kühlmittelteilpfad 46 durchfließt, einstellen.

Die Wärmepumpe 20 weist eine erste Kühlvorrichtung 24 auf, die zugleich im Kühlsystem 40 in Reihe hinter dem Hauptkühler 4 im sechsten Kühlmittelteilpfad 46 vor dem Knotenpunkt 34 und hinter einem Knotenpunkt 35 angeordnet ist und die das gesamte im Hauptkühler 4 gekühlte Kühlmittel weiter abkühlt. Die Wärmepumpe 20 weist ebenfalls eine erste Aufwärmvorrichtung 21 auf, die zugleich im Kühlsystem 40 im ersten Kühlmittelteilpfad 41 angeordnet ist und das dort strömende Kühlmittel erwärmt. Das in der ersten Aufwärmvorrichtung 21 erwärmte Kühlmittel kann zum einen auf dem zweiten Kühlmittelteilpfad 42 zum Hauptkühler 4 gelangen und/oder auf dem dritten Kühlmittelteilpfad 43 zu einem Heizungswärmetauscher 5, der Wärme an die Luft eines Fahrzeuginnenraumes abgibt. Ein zweites Regelventil 61 stellt den Anteil des Kühlmittels, das den ersten, zweiten und/oder dritten Kühlmittelteilpfad 41, 42, 43 durchströmt, ein. Damit das im ersten Kühlmittelteilpfad 41 stark erwärmte Kühlmittel effizient im Hauptkühler 4 abgekühlt werden kann, ist der Hauptkühler 4 in einen Hochtemperaturkühler 7, der im zweiten Kühlmittelteilpfad 42 angeordnet ist, und in einen Niedrigtemperaturkühler 6, der im sechsten Kühlmitteilteilpfad angeordnet ist, aufgeteilt. Der Hochtemperaturkühler 7 ist aus Sicht der den Hochtemperaturkühler durchströmenden Luft in Reihe zu dem Niedrigtemperaturkühler 6 angeordnet und diesem nachgeschaltet, wobei ein Kühlerlüfter 9 die Luft ansaugt. Die zusätzliche Kühlung des Kühlmittels in der ersten Kühlvorrichtung 24 und die effiziente Wärmeabgabe des die erste Aufwärmvorrichtung 21 verlassenden, stark erwärmten Kühlmittels im Hochtemperaturkühler 7 und/oder im Heizungswärmetauscher 5 erhöht die Leistung des Kühlsystems 40.

Das Kältemittel zirkuliert in der Wärmepumpe 20 in einem Kältemittelpfad 80. Das Kältemittel wird in der ersten Kühlvorrichtung 24 erwärmt und eventuell verdampft. Danach durchströmt das Kältemittel einen inneren Wärmetauscher 29 und wird weiter erwärmt und/oder überhitzt. In einem Kompressor 28 wird das Kältemittel komprimiert und dabei noch weiter erwärmt, so dass es nach Durchlaufen des Kompressors 28 die höchste Temperatur erreicht hat. Danach durchläuft das Kältemittel eine erste Aufwärmvorrichtung 21, in der das Kältemittel abgekühlt wird und gegebenenfalls kondensiert. Danach durchläuft das Kältemittel wiederum den inneren Wärmetauscher 29, wo es weiter abgekühlt wird, und ein erstes Expansionsventil 64, durch das das Kältemittel entspannt und noch weiter abgekühlt wird. In dem Kältemittelpfad 80 erreicht das Kältemittel hinter dem Expansionsventil 64 die niedrigste Temperatur. Die Wärmepumpe 20 kann so Wärme des Kühlmittels aus der ersten Kühlvorrichtung 24 in das Kühlmittel in der ersten Aufwärmvorrichtung 21 einbringen. Hierbei weist das Kühlmittel bei Eintritt in der ersten Kühlvorrichtung 24 eine niedrigere Temperatur als das Kühlmittel bei Eintritt in der ersten Aufwärmvorrichtung 21 auf, d. h. die Wärmepumpe 20 transportiert Wärme gegen den Temperaturgradienten.

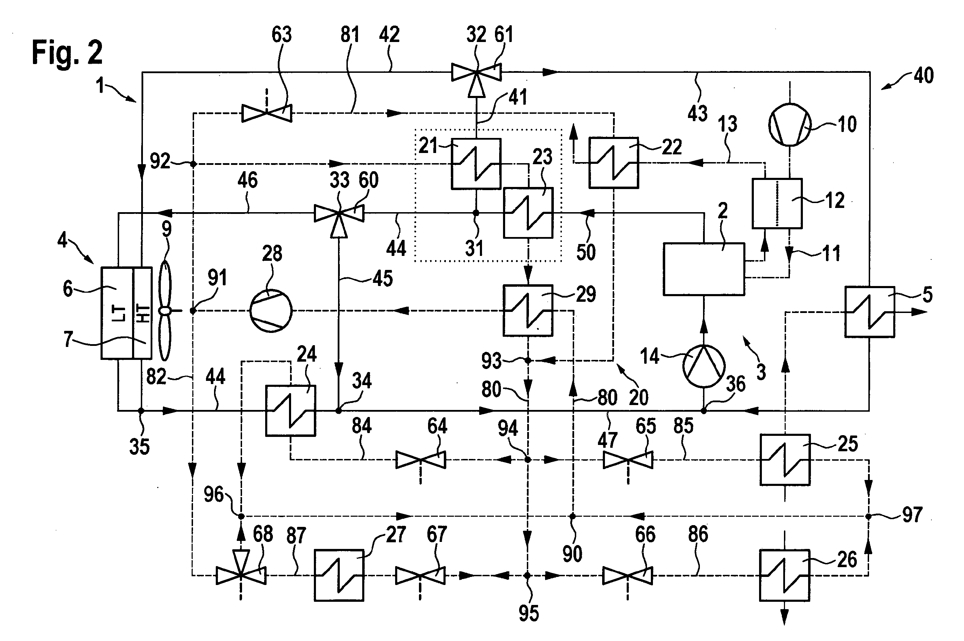

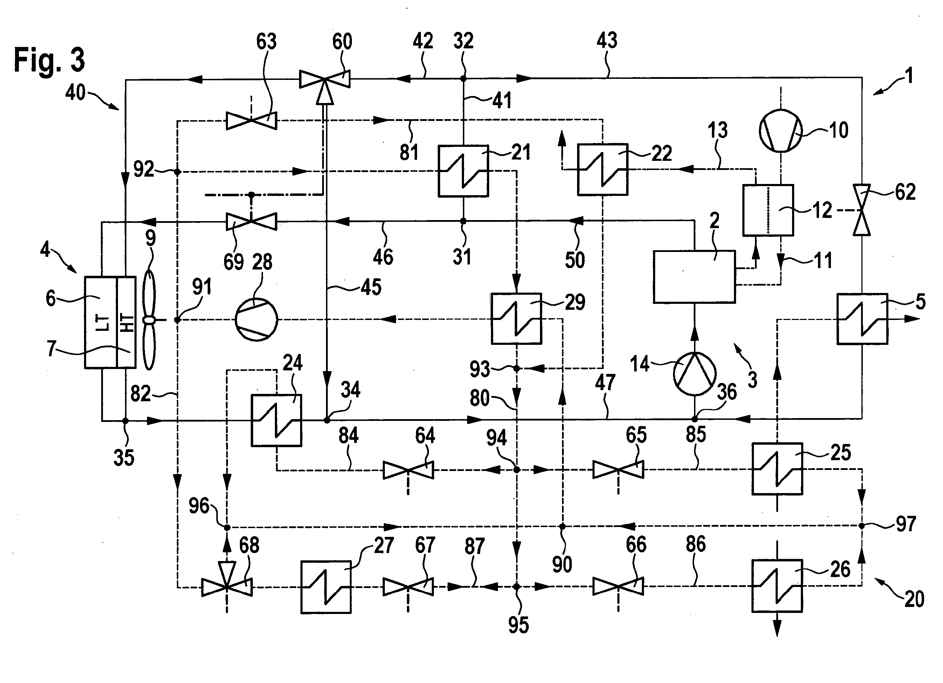

In den Figuren 2 und 3 sind ein zweites und drittes Ausführungsbeispiel der erfindungsgemäßen Temperiervorrichtung dargestellt. Das zweite Ausführungsbeispiel umfasst alle Vorrichtungen und Pfade des ersten Ausführungsbeispiels, deren Bezugszeichen und Beschreibung übernommen werden. Zusätzlich weist die Wärmepumpe 20 weitere Aufwärmvorrichtungen 22, 23 und Kühlvorrichtungen 25, 26, 27, durch die das Kältemittel strömt, auf. So sind parallel zur ersten Kühlvorrichtung 24 eine zweite Kühlvorrichtung 25, die Teil einer Klimaanlage ist, eine dritte Kühlvorrichtung 26, die zur Kühlung von Nebenaggregaten dient, und einer vierten Kühlvorrichtung 27, die zur Kühlung eines Akkumulators dient, angeordnet. In allen vier Kühlvorrichtungen 24, 25, 26, 27 wird das Kältemittel erwärmt. Durch die parallele Anordnung ist jetzt nicht nur ein Kältemittelpfad 80 vorhanden, sondern der Kältemittelpfad 80, in dem zwischen Knotenpunkten 93 und 94 das gesamte Kältemittel strömt, teilt sich an den Knotenpunkten 94 und 95 in einen ersten bis vierten Kältemittelteilpfad 84, 85, 86 und 87 auf, in denen jeweils die Kühlvorrichtungen 24, 25, 26, 27 angeordnet sind. In Knotenpunkten 96, 97 und 90 werden die Kältemittelteilpfade 84, 85, 86, 87 wieder zusammengeführt, so dass zwischen dem Knotenpunkt 90 und einem weiteren Knotenpunkt 91 wieder das vereinte gesamte Kältemittel den inneren Wärmetauscher 29 und den Kompressor 28 durchläuft. In Strömungsrichtung des Kältemittels vorgeschaltet, ist vor jeder Kühlvorrichtung 24, 25, 26, 27 jeweils ein erstes bis viertes Expansionsventil 64, 65, 66, 67 in dem dazugehörigen Kältemittelteilpfad 84, 85, 86, 87 angeordnet, durch das das Kältemittel jeweils entspannt und abgekühlt wird. Weiterhin lässt sich durch das Expansionsventil 64, 65, 66, 67 jeweils die Menge an Kältemittel, die die jeweilige Kühlvorrichtung 24, 25, 26, 27 durchströmt, nach dem jeweiligen Kühlbedarf einstellen.

Die zweite Kühlvorrichtung 25, die als Klimaanlage dient, wird von Luft, die in der zweiten Kühlvorrichtung 25 abgekühlt wird, durchströmt. Die zweite Kühlvorrichtung 25 und der Heizungswärmetauscher 5 werden in Reihe von der Luft durchströmt, die danach in einen Fahrzeuginnenraum eines Kraftfahrzeugs gelangt. Der Strömungsweg der Luft ist in Fig. 2 und 3 durch eine Strich-Punkt-Linie dargestellt. Durch Einstellen des zweiten Expansionsventils 65 und des zweiten Regelventils 61 in Figur 2 oder durch Einstellen des zweiten Expansionsventils 65 und eines ersten Absperrventils 62 in Figur 3 kann die Luft entweder erwärmt oder gekühlt und hierbei entfeuchtet und anschließend bei Bedarf erwärmt werden. Alternativ kann (nicht dargestellt) der Heizungswärmetauscher 5 weggelassen und die zweite Kühlvorrichtung 25, analog wie weiter unten zu der vierten Kühlvorrichtung 27 beschrieben, auch als Aufwärmvorrichtung für die Luft dienen.

Bei den Nebenaggregaten, die die dritte Kühlvorrichtung 26 kühlt, kann es sich um eine Leistungselektronik, einen Verdichter 10 und/oder einen Fahrzeugantriebmotor handeln. Alternativ können weitere parallel angeordnete Kühlvorrichtungen vorgesehen sein, die einzelne Komponenten der Nebenaggregate separat kühlen. Die dritte Kühlvorrichtung 26 kann direkt mindestens ein Nebenaggregat kühlen oder an einen weiteren nicht dargestellten Kühlkreislauf, in dem die Nebenaggregate angeordnet sind, angekoppelt sein. Die vierte Kühlvorrichtung 27 zum Kühlen des Akkumulators kann in dessen Zellstruktur integriert sein.

Die Wärmepumpe weist eine zweite Aufwärmvorrichtung 22 auf, die parallel zur ersten Aufwärmvorrichtung 21 in der Wärmepumpe zwischen Knotenpunkten 92 und 93 in einem fünften Kältemittelteilpfad 81 angeordnet ist. Ein zweites in dem fünften Kältemittelteilpfad 81 angeordnetes Absperrventil 63 stellt den Durchfluss des Kältemittels durch die zweite Aufwärmvorrichtung 22 ein. Die zweite Aufwärmvorrichtung 22 dient zum Erwärmen eines Kathodenaustrittsstroms 13, der aus einem Befeuchter 12 austritt. Ein Kathodeneinstrittsstrom 11 wird in dem Verdichter 10 verdichtet und im Befeuchter 12 vom Kathodenaustrittsstrom 13 befeuchtet. Die Temperatur des Kathodenaustrittsstroms 13 sinkt hierbei und liegt in der Regel unterhalb der Temperatur des Brennstoffzellenstapels 2. Die von der zweiten Aufwärmvorrichtung 22 aufgenommene Wärme des Kathodenaustrittsstroms 13 kann in einer nicht dargestellten nachgeschalteten Turbine teilweise in elektrische Leistung umgewandelt werden. Zudem dient eine hohe Temperatur im feuchten Kathodenaustrittsstrom 13 zur Vermeidung von Tropfenschlag in der Turbine. Die Kathodeneintritts- und austrittsströme 11, 13 sind mit Strich-Punkt-Punkt-Linien dargestellt.

Dadurch dass die Wärmepumpe 20 Wärme durch die zweite und/oder dritte Kühlvorrichtung 25, 26 bei einem Kaltstart in das Kühlsystem 40 einträgt, kann eine Kaltstartzeit wesentlich verkürzt werden. Damit Kühlmittel, ohne den Hauptkühler 4 zu durchlaufen, bei einem Kaltstart erwärmt werden kann, ist in Fig. 2 eine dritte Aufwärmvorrichtung 23 vor dem ersten Regelventil 60, insbesondere im Kühlmittelhauptpfad 50, angeordnet, so dass bei einem Kaltstart das Kühlmittel in der dritten Aufwärmvorrichtung 23 erwärmt, durch den Bypass 45 fließt und so ungekühlt den Brennstoffzellenstapel 2 erreicht, der durch das Kühlmittel erwärmt wird. Alternativ kann in Fig. 2 die dritte Kühlmittelvorrichtung 23 weggelassen und während eines Kaltstartes eine Kühlluftzufuhr, z. B. durch Verschließen einer Kühlerjalousie, unterbunden werden.. Die erste und die dritte Aufwärmvorrichtung 21, 23 können als eine Baueinheit mit zwei Kühlmittelausgängen, einem Kühlmitteleingang und zwei Kältemittelanschlüssen realisiert werden.

Das dritte Ausführungsbeispiel in Fig. 3 unterscheidet sich von dem zweiten Ausführungsbeispiel nur in der Anordnung des Bypasses 45. Hier reicht der Bypass 45 bis zum zweiten Kühlmittelteilpfad 42, in dem in Fig. 3 auch das erste Regelventil 60 angeordnet ist. So kann das in der ersten Aufwärmvorrichtung 21 aufgewärmte Kühlmittel, ohne den Hauptkühler 4 zu durchströmen, durch den Bypass 45 zu dem Brennstoffzellenstapel 2 gelangen und diesen erwärmen, so dass die dritte Aufwärmvorrichtung 23 nicht vonnöten ist. Ein Kühlerregelventil 69 im sechsten Kühlmittelteilpfad 46, der im dritten Ausführungsbeispiel schon am Knotenpunkt 31 beginnt, stellt den Zufluss zum Niedrigtemperaturkühler 6 ein.

In beiden Figuren 2 und 3 ist zudem vorgesehen, auch den Akkumulator im Falle eines Kaltstartes zu erwärmen. Hierzu weist die Wärmepumpe einen sechsten Kältemittelteilpfad 82 auf, der von dem Knotenpunkt 91, an dem das Kältemittel die höchste Temperatur erreicht hat, da es durch die Kühlvorrichtungen 24, 25, 26, 27, den inneren Wärmetauscher 29 und den Kompressor 28 erwärmt worden ist, zu einem hinter dem Knotenpunkt 96 angeordneten Umschaltventil 68 führt. Das Umschaltventil 68 befindet sich in dem vierten Kältemittelteilpfad 87, in dem die vierte Kühlvorrichtung 27 zum Kühlen des Akkumulators angeordnet ist. Durch die Stellung des Umschaltventils 68 kann im Falle eines Kaltstarts Kältemittel mit dem in der Wärmepumpe 20 vorhandenen höchsten Temperaturniveau vom Knotenpunkt 91 durch die vierte Kühlvorrichtung 27 fließen, die in diesem Moment als Aufwärmvorrichtung für den Akkumulator dient. Muss der Akkumulator hingegen gekühlt werden, so kann aus der entgegengesetzten Richtung vom vierten Expansionsventil 67 Kältemittel mit einem tiefen Temperaturniveau die vierte Kühlvorrichtung 27 durchströmen. Hierdurch kann der Akkumulator als Lithium-Ionen-Akkumulator ausgeführt sein.

Im Folgenden sollen die Ventilstellungen bei einem Kaltstart und einer Aufnahme eines Normalbetriebes in Bezug auf das dritte Ausführungsbeispiel beschrieben werden. Im Kaltstart sind das Kühlerregelventil 69, aber auch das erste und das zweite Absperrventil 62, 63 und das Expansionsventil 64 geschlossen. Das Expansionsventil 67 ist voll geöffnet und lässt das Kältemittel passieren. Das Expansionsventil 66 und gegebenenfalls das Expansionsventil 65 sind bedarfsgerecht geöffnet. Das erste Regelventil 60 wird in Richtung des Bypasses 45 geöffnet und ist in Richtung des Hauptkühlers 4 verschlossen, so dass das gesamte Kühlmittel in der ersten Aufwärmvorrichtung 21 erwärmt wird und über den Bypass 45 ungekühlt den Brennstoffzellenstapel 2 erreicht. Das Umschaltventil 68 lässt Kältemittel vom Knotenpunkt 91 die vierte Kühlvorrichtung 27 durchströmen, so dass der Akkumulator erwärmt wird. Die in die Wärmepumpe aufgenommene Wärme wird vollständig zur Erwärmung des Brennstoffzellenstapels 2 und des Akkumulators genutzt. Beim Übergang in den regulären Betrieb wird der Bypass 45 langsam geschlossen und der Kühlmittelteilpfad zum Hochtemperaturkühler 7 langsam geöffnet. Auch das Kühlerregelventil 69, die Absperrventile 62, 63 und die Expansionsventile 64, 67 können nun bedarfsgerecht angesteuert werden. Das Kühlerregelventil 69 bleibt hierbei solange geschlossen, bis über den zweiten Kühlmittelteilpfad 42 auch bei einer weiteren Öffnung des ersten Regelventils 60 in Richtung des Hauptkühlers 4 keine Erhöhung des Kühlmittelstroms mehr erfolgt. Hat der Akkumulator seine Betriebstemperatur erreicht, so schließt das Umschaltventil 68 den Kältemittelteilpfad vom Knotenpunkt 91 und öffnet den Kältemittelteilpfad zum Knotenpunkt 96.

Zur Regelung der Ventile, des Kompressors der Pumpe und des Kühlerventilators können Temperatur- und Druckmessgeräte in der Wärmepumpe und in dem Kühlsystem vorgesehen sein. Eine nicht dargestellte Regelungseinheit kann aus den von den Temperatur- und Druckmessgeräten ermittelten Temperaturen Rückschlüsse auf die optimalen Ventilstellungen und Leistungen des Kompressors, der Pumpe und des Kühlerventilators schließen und die entsprechenden Einstellungen veranlassen. Eine nach dem Stand der Technik vorhandene Anzahl an Temperatur- und Druckmessgeräten und Regelungseinheit kann dafür ausreichend sein.

Die Absperrventile 62, 63 können als Regelventile ausgebildet sein. Die Regelventile können als 3/2 Wege-Ventile ausgebildet sein.

## Patentansprüche

1. Temperiervorrichtung (1) mindestens zum Temperieren mindestens einer Brennstoffzelle (2) eines Brennstoffzellensystems (3), insbesondere für ein Kraftfahrzeug,
wobei die Brennstoffzelle (2) durch ein Kühlmittel, das in einem Kühlsystem (40) strömbar ist, temperierbar ist,
mit mindestens einem Kühler (4, 5) und mit einer Wärmepumpe (20), in der ein Kältemittel zirkulierbar ist,
wobei die Wärmepumpe (20) eine erste Aufwärmvorrichtung (21) zum Erwärmen des Kühlmittels durch das Kältemittel aufweist,
wobei die erste Aufwärmvorrichtung (21) in einem ersten Kühlmittelteilpfad (41) des Kühlsystems (40) angeordnet ist,
**dadurch gekennzeichnet, dass**
das in dem ersten Kühlmittelteilpfad (41) erwärmbare Kühlmittel auf einem Kühlmittelteilpfad (42, 43) durch einen Kühler (4, 5) zum Kühlen des Kühlmittels strömbar ist, wobei insbesondere der erste Kühlmittelteilpfad (41) in Strömungsrichtung gesehen hinter der Brennstoffzelle (2) angeordnet ist, wobei ein Hauptkühler (4) in dem Kühlsystem (40) angeordnet ist und wobei der Hauptkühler (4) in einen Niedrigtemperaturkühler (6) und einen Hochtemperaturkühler (7) aufgeteilt ist, wobei der Hochtemperaturkühler (7) in einem zweiten Kühlmittelteilströmungspfad (42) angeordnet ist.

2. Temperiervorrichtung (1) nach Anspruch 1, **dadurch gekennzeichnet, dass** der Kühler (4,5), der zum Kühlen des in dem ersten Kühlmittelteilpfad (41) aufgewärmte Kühlmittels dient, ein Hauptkühler (4) und/oder ein Wärmetauscher (5) zum Abgeben von Wärme an eine Heizung ist und dass in dem ersten Kühlmittelteilpfad (41) aufgewärmte Kühlmittel auf einem zweiten Kühlmittelteilpfad (42) zu dem Hauptkühler (4) und/oder auf einem dritten Kühlmittelteilpfad (43) zu dem Wärmetauscher (5) strömbar ist, wobei insbesondere der Hauptkühler (4) und/oder der Wärmetauscher (5) ein mit Luft kühlender Kühler ist.

3. Temperiervorrichtung (1) nach einem der vorhergehenden Ansprüche,
**dadurch gekennzeichnet, dass** ein erstes Regelventil (60), durch das ein erster Anteil des Kühlmittels, den Hochtemperaturkühler (7) durchströmt, und ein zweiter Anteil des Kühlmittels, das einen Bypass (45) durchströmt, einstellbar ist, in dem zweiten Teilströmungspfad (42) angeordnet ist.

4. Temperiervorrichtung (1) nach einem der vorhergehenden Ansprüche,
**dadurch gekennzeichnet, dass** der Anteil des Kühlmittels, der den zweiten oder den dritten Kühlmittelteilpfad (42, 43) durchströmt, von mindestens einem Ventil einstellbar ist, wobei insbesondere das Ventil ein 3/2 WegeVentil (60, 61) und optional ein zusätzliches erstes Absperrventil (62) ist.

5. Temperiervorrichtung (1) nach einem der vorhergehenden Ansprüche,
**dadurch gekennzeichnet, dass** die Wärmepumpe (20) eine Kühlvorrichtung (24) zum Kühlen des Kühlmittels durch das Kältemittel aufweist, wobei insbesondere die Kühlvorrichtung (24) und die erste Aufwärmvorrichtung (21) zwei unterschiedliche Vorrichtungen sind.

6. Temperiervorrichtung (1) nach Anspruch 5, **dadurch gekennzeichnet, dass** die Kühlvorrichtung (24) mit dem Hauptkühler (4) in Reihe geschaltet ist.

7. Temperiervorrichtung (1) nach einem der vorhergehenden Ansprüche,
**dadurch gekennzeichnet, dass** die Wärmepumpe mindestens eine weitere Aufwärmvorrichtung (22, 23) aufweist, wobei insbesondere eine in einem parallelen Kältemittelteilpfad (81) angeordnete zweite Aufwärmvorrichtung (22) zum Erwärmen eines Kathodenaustrittstroms (13) durch das Kältemittel in der Wärmepumpe (20) dient.

8. Temperiervorrichtung (1) nach einem der vorhergehenden Ansprüche,
**dadurch gekennzeichnet, dass** eine dritte Aufwärmvorrichtung (23) der Wärmepumpe (20) zum Erwärmen des Kühlmittels durch das Kältemittel in einem Kühlmittelhauptpfad (40) angeordnet ist.

9. Temperiervorrichtung (1) nach einem der vorhergehenden Ansprüche,
**dadurch gekennzeichnet, dass** mindestens eine Kühlvorrichtung (25, 26, 27) zum Kühlen von Vorrichtungen, insbesondere einer Klimaanlage, eines Akkumulators, eines Antriebmotors, eines Verdichters (10) und/oder einer Leistungselektronik, in der Wärmepumpe (20) angeordnet ist.

10. Temperiervorrichtung (1) nach Anspruch 9, **dadurch gekennzeichnet, dass** die Kühlvorrichtung (25, 26, 27) zum Kühlen von Vorrichtungen parallel zur Kühlvorrichtung (24) zum Kühlen des Kühlmittels in der Wärmepumpe (20) angeordnet ist, wobei insbesondere jeweils die Menge des Kältemittels, die jede Kühlvorrichtung (24, 25, 26, 27) durchströmt, durch je ein Expansionsventil (64, 65, 66, 67) einstellbar ist.

11. Temperiervorrichtung (1) nach einem der vorhergehenden Ansprüche,
**dadurch gekennzeichnet, dass** ein Umschaltventil (68) in einem Kältemittelteilpfad (87) bei einer Kühlvorrichtung (27) zum Kühlen des Akkumulators so angeordnet ist, dass die Kühlvorrichtung (27) auch als Aufwärmvorrichtung zum Erwärmen des Akkumulators nutzbar ist.

12. Verfahren zum Betreiben einer Temperiervorrichtung (1), wobei die Temperiervorrichtung (1) mindestens eine Brennstoffzelle (2) eines Brennstoffzellensystems (3) temperiert, wobei die Brennstoffzelle (2) durch ein Kühlmittel, das ein Kühlsystem (40) durchströmt, temperiert wird, und wobei ein erster Teilstrom des Kühlmittels durch ein Kältemittel einer Wärmepumpe (20) in einer ersten Aufwärmvorrichtung (21) der Wärmepumpe (20) erwärmbar ist, **dadurch gekennzeichnet, dass** mindestens ein Teil des ersten Teilstroms auf einem Kühlmittelteilpfad (42, 43) durch einen Kühler (4,5) des Kühlsystems strömbar und durch den Kühler (4,5) kühlbar ist, wobei ein Hauptkühler (4) in dem Kühlsystem (40) angeordnet ist und wobei der Hauptkühler (4) in einen Niedrigtemperaturkühler (6) und einen Hochtemperaturkühler (7) aufgeteilt ist, wobei der Hochtemperaturkühler (7) im zweiten Kühlmittelteilströmungspfad (42) angeordnet ist.

13. Verfahren nach Anspruch 12, das mit einer Temperiervorrichtung (1) nach einem der Ansprüche 1 bis 11 betrieben wird.

## Claims

1. Temperature control device (1) at least for controlling the temperature of at least one fuel cell (2) of a fuel cell system (3), in particular for a motor vehicle,
wherein the temperature of the fuel cell (2) can be controlled by means of a coolant which can be caused to flow in a cooling system (40),
having at least one cooler (4, 5) and having a heat pump (20) in which a refrigerant can be circulated,
wherein the heat pump (20) has a first heating device (21) for heating the coolant by means of the refrigerant,
wherein the first heating device (21) is arranged in a first coolant sub-path (41) of the cooling system (40),
**characterized in that**
the coolant that can be heated in the first coolant sub-path (41) can be caused to flow on a coolant sub-path (42, 43) through a cooler (4, 5) for cooling the coolant, wherein in particular the first coolant sub-path (41) is arranged downstream of the fuel cell (2) as viewed in the flow direction, wherein a main cooler (4) is arranged in the cooling system (40), and wherein the main cooler (4) is divided into a low-temperature cooler (6) and a high-temperature cooler (7), wherein the high-temperature cooler (7) is arranged in a second coolant flow sub-path (42).

2. Temperature control device (1) according to Claim 1, **characterized in that** the cooler (4, 5) which serves for cooling the coolant that is heated in the first coolant sub-path (41) is a main cooler (4) and/or a heat exchanger (5) for discharging heat to a heater, and **in that** coolant that is heated in the first coolant sub-path (41) can be caused to flow on a second coolant sub-path (42) to the main cooler (4) and/or on a third coolant sub-path (43) to the heat exchanger (5), wherein in particular the main cooler (4) and/or the heat exchanger (5) is a cooler that is cooled by means of air.

3. Temperature control device (1) according to one of the preceding claims, **characterized in that** a first regulating valve (60) is arranged in the second flow sub-path (42), by means of which first regulating valve a first coolant fraction that flows through the high-temperature cooler (7) and a second coolant fraction that flows through a bypass (45) can be adjusted.

4. Temperature control device (1) according to one of the preceding claims, **characterized in that** that coolant fraction which flows through the second or the third coolant sub-path (42, 43) can be adjusted by means of at least one valve, wherein in particular, the valve is a 3/2 directional valve (60, 61) and is optionally an additional first shut-off valve (62).

5. Temperature control device (1) according to one of the preceding claims, **characterized in that** the heat pump (20) has a cooling device (24) for cooling the coolant by means of the refrigerant, wherein in particular, the cooling device (24) and the first heating device (21) are two different devices.

6. Temperature control device (1) according to Claim 5, **characterized in that** the cooling device (24) is connected in series with the main cooler (4).

7. Temperature control device (1) according to one of the preceding claims, **characterized in that** the heat pump has at least one further heating device (22, 23), wherein in particular, a second heating device (22) arranged in a parallel refrigerant sub-path (81) serves for heating a cathode outlet stream (13) by means of the refrigerant in the heat pump (20).

8. Temperature control device (1) according to one of the preceding claims, **characterized in that** a third heating device (23) of the heat pump (20) for heating the coolant by means of the refrigerant is arranged in a coolant main path (40).

9. Temperature control device (1) according to one of the preceding claims, **characterized in that** at least one cooling device (25, 26, 27) for cooling devices, in particular an air-conditioning system, a battery, a drive motor, a compressor (10) and/or power electronics, is arranged in the heat pump (20).

10. Temperature control device (1) according to Claim 9, **characterized in that** the cooling device (25, 26, 27) for cooling devices is arranged in parallel with the cooling device (24) for cooling the coolant in the heat pump (20), wherein in particular, the amount of refrigerant flowing in each case through each cooling device (24, 25, 26, 27) can be adjusted by means of in each case one expansion valve (64, 65, 66, 67).

11. Temperature control device (1) according to one of the preceding claims, **characterized in that** a switchover valve (68) is arranged in a refrigerant sub-path (87) at a cooling device (27) for cooling the battery, in such a way that the cooling device (27) can also be utilized as a heating device for heating the battery.

12. Method for operating a temperature control device (1), wherein the temperature control device (1) controls the temperature of at least one fuel cell (2) of a fuel cell system (3), wherein the temperature of the fuel cell (2) is controlled by means of a coolant which flows through a cooling system (40), and wherein a first sub-stream of the coolant can be heated by means of a refrigerant of a heat pump (20) in a first heating device (21) of the heat pump (20), **characterized in that** at least a part of the first sub-stream can be caused to flow on a coolant sub-path (42, 43) through a cooler (4, 5) of the cooling system and can be cooled by means of the cooler (4, 5), wherein a main cooler (4) is arranged in the cooling system (40), and wherein the main cooler (4) is divided into a low-temperature cooler (6) and a high-temperature cooler (7), wherein the high-temperature cooler (7) is arranged in the second coolant flow sub-path (42).

13. Method according to Claim 12, said method being implemented by means of a temperature control device (1) according to one of Claims 1 to 11.

## Revendications

1. Ensemble (1) de contrôle de température servant à contrôler la température d'au moins une cellule à combustible (2) d'un système (3) de cellules à combustible, en particulier pour véhicule automobile,
la température de la cellule à combustible (2) étant contrôlée par l'intermédiaire d'un agent de refroidissement qui peut s'écouler dans un système de refroidissement (40),
l'ensemble présentant au moins un refroidisseur (4, 5) et une pompe à chaleur (20) dans laquelle un fluide frigorifique peut circuler,
la pompe à chaleur (20) présentant un premier ensemble de chauffage (21) qui chauffe le fluide de refroidissement par le fluide frigorifique,
le premier ensemble de chauffage (21) étant disposé dans un premier parcours partiel (41) de fluide de refroidissement du système de refroidissement (40), **caractérisé en ce que**
le fluide de refroidissement apte à être chauffé dans le premier parcours partiel (41) de fluide de refroidissement peut s'écouler dans un parcours partiel (42, 43) de fluide de refroidissement qui traverse un refroidisseur (4, 5) servant à refroidir le fluide de refroidissement,
**en ce que** le premier parcours partiel (41) de fluide de refroidissement est en particulier disposé en aval de la cellule à combustible (2) dans la direction d'écoulement,
**en ce qu'**un refroidisseur principal (4) est disposé dans le système de refroidissement (40),
**en ce que** le refroidisseur principal (4) est divisé en un refroidisseur (6) à basse température et un refroidisseur (7) à haute température et
**en ce que** le refroidisseur (7) à haute température est disposé dans un deuxième parcours partiel (42) d'écoulement de fluide de refroidissement.

2. Ensemble (1) de contrôle de température selon la revendication 1, **caractérisé en ce que** le refroidisseur (4, 5) qui sert à refroidir le fluide de refroidissement chauffé dans le premier parcours partiel (41) de fluide de refroidissement est un refroidisseur principal (4) et/ou un échangeur de chaleur (5) qui délivre de la chaleur à un ensemble de chauffage, **en ce que** le fluide de refroidissement chauffé dans le premier parcours partiel (41) de fluide de refroidissement peut être amené à s'écouler dans un deuxième parcours partiel (42) de fluide de refroidissement en direction du refroidisseur principal (4) et/ou dans un troisième parcours partiel (43) de fluide de refroidissement qui amène l'échangeur de chaleur (5) et **en ce que** le refroidisseur principal (4) et/ou l'échangeur de chaleur (5) sont des refroidisseurs refroidis à l'air.

3. Ensemble (1) de contrôle de température selon l'une des revendications précédentes, **caractérisé en ce qu'**une première soupape de régulation (60) par laquelle une première partie du fluide de refroidissement traverse le refroidisseur (7) à haute température et une deuxième partie du fluide de refroidissement traverse une dérivation (45) est réglable et disposée dans le deuxième parcours partiel d'écoulement (42).

4. Ensemble (1) de contrôle de température selon l'une des revendications précédentes, **caractérisé en ce qu'**une partie du fluide de refroidissement qui traverse le deuxième ou le troisième parcours partiel (42, 43) de fluide de refroidissement peut être ajustée par au moins une soupape, la soupape étant une soupape à 3/2 voies (60, 61) et facultativement une première soupape de blocage (62) supplémentaire.

5. Ensemble (1) de contrôle de température selon l'une des revendications précédentes, **caractérisé en ce que** la pompe à chaleur (20) présente un ensemble de refroidissement (24) qui refroidit le fluide de refroidissement par le fluide frigorifique, l'ensemble de refroidissement (24) et le premier ensemble de chauffage (21) étant en particulier deux dispositifs différents.

6. Ensemble (1) de contrôle de température selon la revendication 5, **caractérisé en ce que** le dispositif de refroidissement (24) est raccordé en série sur le refroidisseur principal (4).

7. Ensemble (1) de contrôle de température selon l'une des revendications précédentes, **caractérisé en ce que** la pompe à chaleur présente au moins un autre ensemble de chauffage (22, 23), un deuxième ensemble de chauffage (22) disposé en particulier dans un parcours partiel (81) parallèle de fluide frigorifique servant à chauffer un écoulement (13) de sortie de cathode par le fluide frigorifique dans la pompe à chaleur (20).

8. Ensemble (1) de contrôle de température selon l'une des revendications précédentes, **caractérisé en ce qu'**un troisième ensemble de chauffage (23) de la pompe à chaleur (20) prévu pour chauffer le fluide de refroidissement par le fluide frigorifique est disposé dans un parcours principal (40) de fluide de refroidissement.

9. Ensemble (1) de contrôle de température selon l'une des revendications précédentes, **caractérisé en ce qu'**au moins un dispositif de refroidissement (25, 26, 27) servant à refroidir des dispositifs, notamment une installation de climatisation, un accumulateur, un moteur d'entraînement, un compresseur (10) et/ou une électronique de puissance, est disposé dans la pompe à chaleur (20).

10. Ensemble (1) de contrôle de température selon la revendication 9, **caractérisé en ce que** l'ensemble de refroidissement (25, 26, 27) servant à refroidir des dispositifs est disposé en parallèle par rapport à l'ensemble de refroidissement (24) servant à refroidir le fluide de refroidissement dans la pompe à chaleur (20), le débit de fluide frigorifique qui traverse chaque ensemble de refroidissement (24, 25, 26, 27) pouvant être réglé par une soupape de détente (64, 65, 66, 67) respective.

11. Ensemble (1) de contrôle de température selon l'une des revendications précédentes, **caractérisé en ce qu'**une soupape de commutation (68) est disposée dans un parcours partiel (87) de fluide frigorifique d'un ensemble de refroidissement (27) servant à refroidir l'accumulateur de telle sorte que l'ensemble de refroidissement (27) puisse également être utilisé comme ensemble de chauffage destiné à chauffer l'accumulateur.

12. Procédé de conduite d'un ensemble (1) de contrôle de température, l'ensemble (1) de contrôle de température maintenant la température d'au moins une cellule à combustible (2) d'un système (3) de cellules à combustible, la température de la cellule à combustible (2) étant contrôlée par un fluide de refroidissement qui traverse un système de refroidissement (40) et un premier écoulement partiel de fluide de refroidissement pouvant être chauffé par un fluide frigorifique d'une pompe à chaleur (20) dans un premier ensemble de chauffage (21) de la pompe à chaleur (20),
**caractérisé en ce que**
au moins une partie du premier écoulement partiel peut s'écouler dans un parcours partiel (42, 43) de fluide de refroidissement qui traverse un refroidisseur (4, 5) du système de refroidissement et peut être refroidie par le refroidisseur (4, 5),
**en ce qu'**un refroidisseur principal (4) est disposé dans le système de refroidissement (40),
**en ce que** le refroidisseur principal (4) est divisé en un refroidisseur (6) à basse température et un refroidisseur (7) à haute température et
**en ce que** le refroidisseur (7) à haute température est disposé dans le deuxième parcours partiel (42) d'écoulement de fluide de refroidissement.

13. Procédé selon la revendication 12, mis en oeuvre à l'aide d'un ensemble (1) de contrôle de température selon l'une des revendications 1 à 11.
